# EUROPÄISCHE PATENTSCHRIFT

(11) **EP 1 399 776 B1**
(45) Veröffentlichungstag und Bekanntmachung des Hinweises auf die Patenterteilung: **18.02.2009**
(21) Anmeldenummer: 02730128.2
(22) Anmeldetag: 09.04.2002
(51) Int. Cl.: G02C 5/22

(54) **FEDERSCHARNIER**
SPRING HINGE
CHARNIERE A RESSORT

(30) Priorität: 06.06.2001 DE 10128383
(43) Veröffentlichungstag der Anmeldung: 24.03.2004
(73) Patentinhaber: OBE Ohnmacht & Baumgärtner GmbH & Co. KG, 75228 Ispringen (DE)
(72) Erfinder: WAGNER, Reiner, 75228 Ispringen (DE)
(74) Vertreter: Gleiss, Alf-Olav
(86) Internationale Anmeldenummer: PCT/EP2002/003899
(87) Internationale Veröffentlichungsnummer: WO 2002/099512

(56) Entgegenhaltungen:
- EP-A- 0 679 920
- WO-A-01/04689
- DE-A- 19 856 117
- FR-A- 2 719 913
- FR-A- 2 793 323

## Beschreibung

Die Erfindung betrifft ein elektroschweißbares Federscharnier gemäß Oberbegriff des Anspruchs 1.

Federscharniere der hier angesprochenen Art sind bekannt, beispielsweise von DE 198 56117, EP 0 679 920 oder WO 01/04689. Sie werden als Scharniere für Brillenbügel verwendet und mittels eines Elektroschweißverfahrens an den Brillenbügeln befestigt. Beim Elektroschweißen wird das Federscharnier fest an einem Brillenbügel angedrückt. Der Anpressdruck liegt beispielsweise im Bereich von 70 bis 700 N. Sobald die Anpresskräfte aufgebracht sind, wird ein Schweißstrom von 2.000 A bis 8.000 A über das Gehäuse und den Bügel geleitet. Im Berührungsbereich zwischen Federscharnier und Brillenbügel sind Schweißwarzen vorgesehen, die sich bei den hohen Stromstärken erwärmen und schmelzen. Auf diese Weise wird eine feste Verbindung zwischen Federscharnier und Brillenbügel erzeugt. Es hat sich herausgestellt, dass bei den hohen Anpresskräften eine Verformung des Gehäuses des Federscharniers eintreten kann, insbesondere des innerhalb des Gehäuses vorgesehenen Hohlraums, der dazu dient, ein Scharnierelement aufzunehmen. Dieses wird bei Benutzung des Federscharniers innerhalb des Hohlraums verlagert. Beim Elektroschweißen können auch Materialverlagerungen eintreten, die eine optimale Funktion des Federscharniers beeinträchtigen: Es ist möglich, dass Material in das Innere des Gehäuses, nämlich in den Hohlraum, verlagert wird, so dass dort ein Vorsprung entsteht. Findet eine Verformung des Gehäuses und damit des Hohlraums statt oder wird Material beim Schweißen in den Hohlraum verlagert, ergibt sich eine Beeinträchtigung der Beweglichkeit des Scharnierelements gegenüber dem Gehäuse und damit der Funktion des Federscharniers. Derartige Verformungen des Gehäuses treten insbesondere bei kleinen Federscharnieren auf, wie sie mehr und mehr Verwendung finden.

Aufgabe der Erfindung ist es daher, ein Federscharnier der eingangs genannten Art zu schaffen, das trotz kleinster Abmessungen in einem Elektroschweißverfahren optimal auf einem Brillenbügel aufbringbar ist.

Zur Lösung dieser Aufgabe wird ein Federscharnier vorgeschlagen, das die in Anspruch 1 genannten Merkmale aufweist. Es zeichnet sich dadurch aus, dass das Gehäuse des Federscharniers einen Hohlraum aufweist, in den zumindest während des Elektroschweißens ein Stützkörper einbringbar ist. Dies bietet den Vorteil, dass der Stützkörper unerwünschte, durch das Elektroschweißverfahren verursachte, Materialverlagerungen verhindert und dass der Stützkörper das Gehäuse während des Schweißens stabilisiert und einen optimalen Kraftfluss garantiert.

Bevorzugt wird ein Ausführungsbeispiel des Federscharniers, das sich dadurch auszeichnet, dass der Stützkörper als separates Teil ausgebildet und aus dem Hohlraum herausnehmbar ist. Dies ermöglicht eine Mehrfachverwendung des Stützkörpers im Produktionsprozess.

Ein weiteres bevorzugtes Ausführungsbeispiel zeichnet sich dadurch aus, dass der Stützkörper Teil eines in das Gehäuse einbringbaren Scharnierelements ist. Dies ermöglicht eine kleinstmögliche Dimensionierung des Hohlraums und damit des Federscharniers und spart beim Produktionsprozess zwei Prozessschritte, nämlich das Einführen und Herausnehmen des Stützkörpers.

Ein weiteres bevorzugtes Ausführungsbeispiel zeichnet sich dadurch aus, dass der Stützkörper Teil eines Federelements des Scharnierelements ist. Dies ermöglicht neben einer kompakten Bauform des Federscharniers einen einfachen Aufbau mit wenigen Teilen und somit eine wirtschaftliche Herstellung des Federscharnier.

Ein weiteres bevorzugtes Ausführungsbeispiel zeichnet sich dadurch aus, dass der Stützkörper als Führungselement für das Scharnierelement ausgebildet ist. In diesem Fall wird ein ohnehin benötigtes Teil des Federscharniers so ausgebildet, dass es die Funktion des Stützkörpers zusätzlich erfüllt, was letztendlich die Anzahl der Einzelteile des Federscharniers reduziert und damit eine kostengünstige Herstellung ermöglicht.

Ein weiteres bevorzugtes Ausführungsbeispiel zeichnet sich dadurch aus, dass das Federscharnier auf einem Brillenbügel mittels eines Elektroschweißverfahrens aufbringbar ist. Dies ermöglicht eine gut automatisierbare, bei definierten Temperaturverhältnissen durchführbare feste Verbindung des Federscharniers mit dem Brillenbügel.

Ein weiteres bevorzugtes Ausführungsbeispiel zeichnet sich dadurch aus, dass das Gehäuse des Federscharniers zumindest zwei Schweißwarzen aufweist. Dies bietet den Vorteil, dass aufgrund der Dimensionierung und Positionierung der Schweißwarzen die Schweißströme und damit das Fließverhalten und die Aufweichung des Materials exakt festlegbar sind.

Ein weiteres bevorzugtes Ausführungsbeispiel zeichnet sich dadurch aus, dass der Stützkörper im Bereich einer Schweißwarze angeordnet ist. Damit kann der über die Schweißwarze eingeleitete, zum Verschweißen erforderliche Anpressdruck durch den Stützkörper aufgenommen werden und auch dadurch nicht erwünschte Verformungen des Gehäuses des Federscharniers verhindert werden.

Ein weiteres bevorzugtes Ausführungsbeispiel zeichnet sich dadurch aus, dass das Scharnierelement als vormontierte Einheit in das Gehäuse einbringbar ist. Dies bietet den Vorteil eines optimierten und wirtschaftlichen Herstellungsprozesses.

Ein weiteres bevorzugtes Ausführungsbeispiel zeichnet sich dadurch aus, dass das Federscharnier eine Sicke und/oder Rastelemente zum Fixieren des Scharnierelements im Gehäuse aufweist. Im Fertigungsprozess wird entweder das Scharnierelement in das Gehäuse eingebracht und dort verrastet und/oder es wird das Scharnierelement ins Gehäuse eingebracht und mittels einer einzubringenden Sicke dort fixiert. Dies bietet den Vorteil einer einfach herzustellenden und sicheren Fixierung des Scharnierelements im Gehäuse des Federscharniers.

Ein weiteres bevorzugtes Ausführungsbeispiel zeichnet sich dadurch aus, dass die Sicke von einer Schweißwarze umgeben ist. Dies bietet den Vorteil, dass die Schweißwarze und die Sicke in unmittelbarer Nähe des Stützkörpers am Gehäuse angebracht werden können.

Ein weiteres bevorzugtes Ausführungsbeispiel zeichnet sich dadurch aus, dass der Stützkörper eine Nut aufweist und vorteilhafterweise im Hohlraum des Gehäuses verbleibt. Dies bietet den Vorteil, dass die Sicke zum Fixieren des Stützkörpers in die Nut eingreifen kann.

Ein weiteres bevorzugtes Ausführungsbeispiel zeichnet sich dadurch aus, dass bei dem Elektroschweißverfahren definiert verlagertes Material das Scharnierelement im Gehäuse fixiert. Dies bietet den Vorteil, dass beim Herstellungsprozess der Einzelteile des Federscharniers keine Rastelemente oder Sicken vorgesehen werden müssen, weil diese Funktion die durch das Schweißverfahren auftretenden Verformungen erfüllen.

Ein weiteres bevorzugtes Ausführungsbeispiel zeichnet sich dadurch aus, dass das beim Elektroschweißverfahren verlagerte Material in die Nut des Stützkörpers eingreift. Dies bietet den Vorteil, das der Stützkörper beim Prozessschritt des Schweißens' im Gehäuse fixiert wird und als Anschlag für das Federelement dienen kann.

Ein weiteres bevorzugtes Ausführungsbeispiel zeichnet sich dadurch aus, dass das Gehäuse mit Hilfe von MIM-Technologie (Metal Injektion Molding) herstellbar ist. Bei der MIM-Technologie lassen sich analog eines Spritzgießverfahrens kompliziertere Formen des Gehäuses des Federscharniers realisieren.

Die Erfindung wird im Folgenden anhand der Zeichnung näher erläutert. Es zeigen:
- Figur 1: einen Längsschnitt eines Gehäuses mit Stützkörper;
- Figur 2: eine Draufsicht auf die Stirnseite des Gehäuses;
- Figur 3: eine Draufsicht auf die Stirnseite des Gehäuses im verschweißten Zu- stand mit einem Brillenbügel;
- Figur 4: ein weiteres Ausführungsbeispiel des Gehäuses in dergleichen Ansicht wie Figur 2;
- Figur 5: ein Gehäuse wie in Figur 4 im ver- schweißten Zustand mit einem Bril- lenbügel;
- Figur 6: einen Teillängsschnitt eines Feder- scharniers;
- Figur 7: eine Unteransicht des in Figur 6 dargestellten Federscharniers;
- Figuren 8 bis 10: weitere Ausführungsbeispiele des in Figur 6 dargestellten Federschar- niers;
- Figur 11: ein Unteransicht des in Figur 10 dargestellten Federscharniers und
- Figuren 12 bis 14: weitere Ausführungsbeispiele analog dem in Figur 6 dargestellten Feder- scharnier.

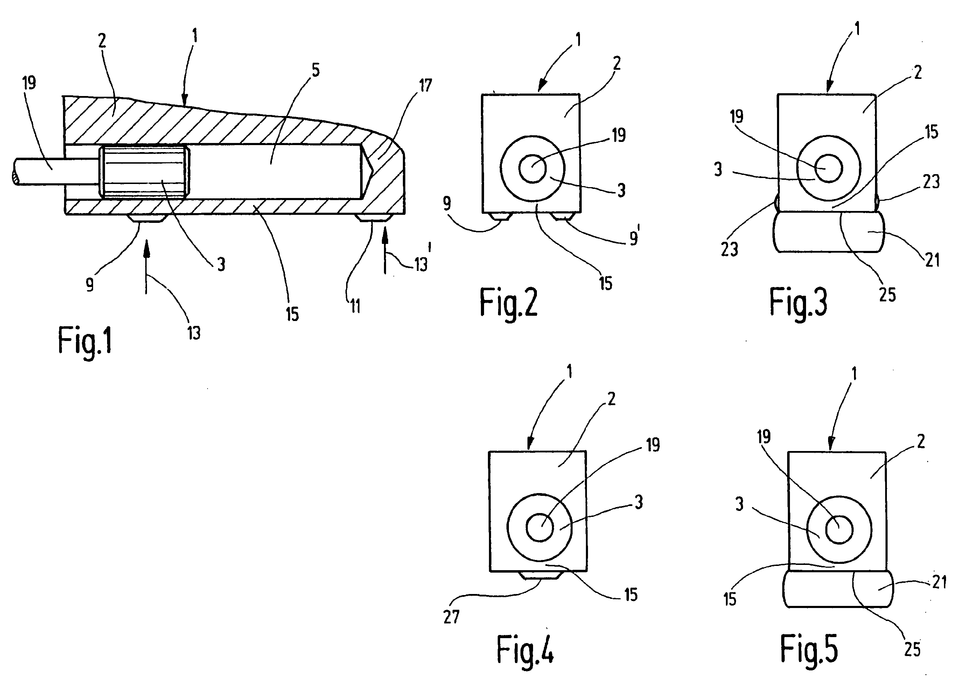

Figur 1 zeigt einen Längsschnitt eines Federscharniers 1 für Brillen mit einem Gehäuses 2 und mit einem Stützkörper 3. Zu erkennen ist, dass das Gehäuse 2 einen Hohlraum aufweist, der hier als zylindrische Ausnehmung 5 ausgeführt ist, in den der Stützkörper 3 einbringbar ist. Das Gehäuse 2 umfasst eine erste Schweißwarze 9 und eine zweite Schweißwarze 11, die zum Elektro-Verschweißen des Gehäuses 2 mit einem hier nicht dargestellten Bügel einer Brille, dienen. Beim Verschweißen treten an den Schweißwarzen 9 und 11 Kräfte auf, die durch zwei Pfeile 13, 13' angedeutet sind. Je nach Auslegung des Gehäuses 2 könnten die Kräfte zu einer ungewollten Deformation des Gehäuses 2 führen. Es ist zu erkennen, dass der Stützkörper 3 im Bereich der ersten Schweißwarze 9 in das Gehäuse 2 eingebracht ist. Die beim Verschweißen wirkende Kraft, die durch den Pfeil 13 angedeutet ist, wird daher über eine Gehäusewand 15 direkt auf den Stützkörper 3 übertragen. Unerwünschte Deformationen des Gehäuses 2 im Bereich der Gehäusewand 15 sind damit praktisch ausgeschlossen. Am Ende der Ausnehmung 5 schließt sich ein Stützbereich 17 an, der aus Vollmaterial ausgeführt ist und zum Aufnehmen der beim Schweißen übertragenen Kräfte, die durch den Pfeil 13' angedeutet sind, dient. Der Stützkörper 3 und der Stützbereich 17 verleihen damit dem Gehäuse 2 die für den Schweißprozess notwendige Stabilität. Nach dem Schweißvorgang kann der Stützkörper 3, der hier an einem Stab 19 befestigt ist, mittels des Stabes 19 aus der Ausnehmung 5 herausgenommen werden. Damit kann nach dem Verschweißen in die Ausnehmung 5 ein Scharnierelement eingebracht werden.

Figur 2 zeigt eine Draufsicht auf die Stirnseite des Gehäuses 2. Gleiche Teile sind mit gleichen Bezugsziffern versehen, so dass auf die Beschreibung zu Figur 1 verwiesen wird.

Zu erkennen ist der Stützkörper 3 mit dem Stab 19, der sich in der zylindrischen Ausnehmung 5 im Bereich der ersten Schweißwarze 9 und einer weiteren ersten Schweißwarze 9' befindet. Weiter zu erkennen ist, dass es sich beim Gehäuse 2 um ein geschlossenes Gehäuse handelt, das lediglich eine Öffnung, die durch die Ausnehmung 5 gebildet wird, aufweist.

Figur 3 zeigt das Gehäuse 2 wie in Figur 2, mit dem Unterschied, dass es mit einem Brillenbügel 21 verschweißt ist. Zu erkennen ist beim Schweißen verlagertes Material, das sich in Form von Beulen 23 seitlich an dem Übergang 25 zwischen dem Gehäuse 2 und dem Brillenbügel 21 befindet. Der Stützkörper 3 liegt an der Innenseite der Gehäusewand 15 an und stützt diese ab. Dies bietet zusätzlich zu der stützenden Funktion den Vorteil, dass beim Schweißvorgang erweichtes Material nicht in die Ausnehmung 5 gelangen kann, so dass Funktionsstörungen des Federscharniers sicher vermieden werden. Das heißt, aufgrund der stützenden Wirkung des Stützkörpers 3 sind Verformungen der Innenfläche der Ausnehmung 5 praktisch ausgeschlossen.

Figur 4 zeigt ein weiteres Ausführungsbeispiel des Gehäuses 2 in derselben Ansicht, wie es die Figuren 2 und 3 zeigen. Gleiche Teile sind mit gleichen Bezugsziffern versehen, so dass insofern auf die Beschreibung zu den vorangegangenen Figuren verwiesen wird.

Der wesentliche Unterschied zu Figur 2 besteht darin, das anstelle der ersten Schweißwarzen 9, 9' eine mittige Schweißwarze 27 vorgesehen ist. Aufgrund der Anordnung des Stützkörpers 3 im Bereich der mittigen Schweißwarze 27 ist es möglich, dass das Gehäuse 2 trotz der beim Elektroschweißen auftretenden Kräfte unverformt bleibt. Des Weiteren ist gewährleistet, das beim Schweißvorgang erweichtes Material nicht in die zylindrische Ausnehmung 5 gelangen kann und dort zu unerwünschten Beulen führt.

Figur 5 zeigt das in Figur 4 dargestellte Gehäuse 2 des Federscharniers 1 mit dem Brillenbügel 21. Gleiche Teile sind mit gleichen Bezugsziffern versehen, so dass insofern auf die Beschreibung zu den vorangegangenen Figuren verwiesen wird.

Der wesentliche Unterschied zu Figur 3 besteht darin, dass der Schweißvorgang keine unerwünschten seitlichen Beulen 23 verursacht. Dies liegt daran, dass die Schweißwarze 27 mittig angeordnet ist, so dass durch den Schweißvorgang erweichte Bereiche der Schweißwarze 27 sich nicht bis an die Außenflächen des Gehäuses 2 ausbreiten können. Beim Schweißvorgang wird auch der in der Mitte, in unmittelbarer Nähe der mittigen Schweißwarze 27 und des Stützkörpers 3 liegende Bereich der Gehäusewand 15 erweicht. Der Stützkörper 3 stellt dabei sicher, dass unerwünschte Verformungen der Innenfläche der zylindrischen Ausnehmung 5 ausgeschlossen sind.

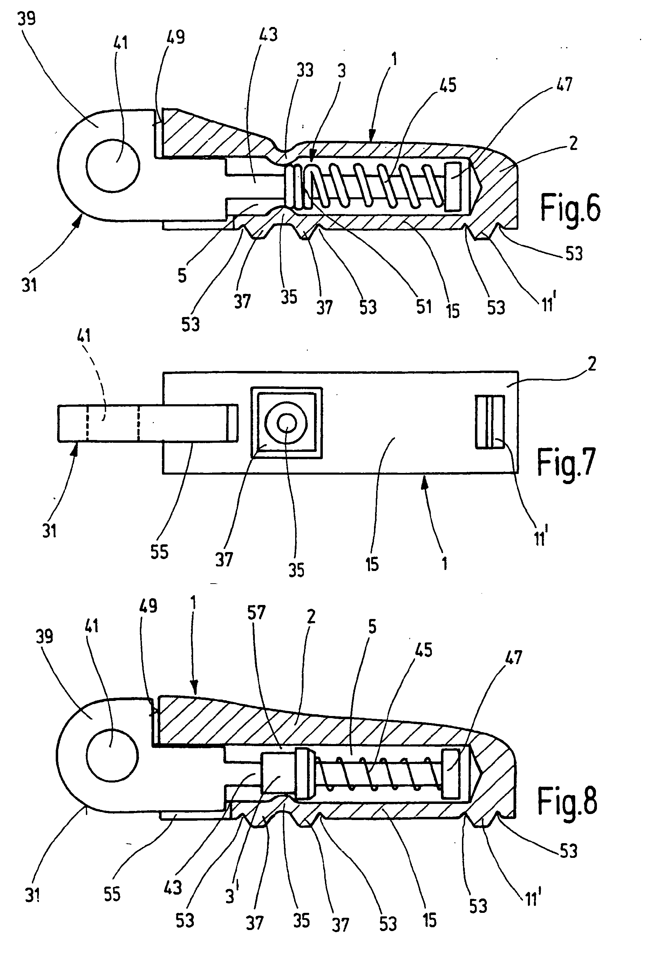

Figur 6 zeigt einen Teillängsschnitt eines Federscharniers 1 mit einem Gehäuse 2 und mit einem Scharnierelement 31, das in die zylindrische Ausnehmung 5 des Gehäuses 2 des Federscharniers 1 hineinragt und dort mittels einer oberen Sicke 33 und einer unteren Sicke 35 fixiert ist. Das Scharnierelement 31 weist im Wesentlichen einen Lagerkörper 39 mit einer Bohrung 41, einen Federstift 43 mit einem hier als Schraubenfeder 45 ausgebildeten Federelement und einem Federanschlag 47 auf. Der Federanschlag 47 ist fest mit dem Federstift 43 des Scharnierelements 31 verbunden oder wird von diesem gebildet, beispielsweise durch eine Verformung des Endes des Federstifts. Die Schraubenfeder 45 wird durch den Federstift 43 geführt und befindet sich zwischen dem Federanschlag 47 und der oberen Sicke 35 und der unteren Sicke 35 des Gehäuses 2. Die beiden Sicken 33 und 35 engen den freien Innenraum der Ausnehmung 5 so ein, dass sie als Anschlag für die Schraubenfeder 45 wirken. Wird bei Benutzung des Federscharniers 1 eine Zugkraft auf das Scharnierelement 31 ausgeübt, so findet eine Verformung der Schraubenfeder 45 derart statt, dass Rückstellkräfte aufgebaut werden, die das Scharnierelement beziehungsweise dessen Federstift 43 in das Innere der Ausnehmung 5 zurückziehen. Bei der Darstellung gemäß Figur 6 werden also durch die Schraubenfeder 45 nach rechts wirkende Rückstellkräfte auf das Scharnierelement 31 ausgeübt, so dass der ein Scharnierauge bildende Lagerkörper 39 gegen eine Anlagefläche 49 gezogen wird, die von der linken Vorderseite des Gehäuses 2 des Federscharniers 1 gebildet wird. Die Grundfunktion des Federscharniers 1 ist grundsätzlich bekannt, so dass hier nur kurz darauf eingegangen wird: An dem Scharnierelement 31 ist beispielsweise mittels einer Schraube, die die Bohrung 41 durchgreift, ein Mittelteilscharnier angebracht, das am Mittelteil einer Brille befestigt ist. Beim Aufklappen der Brillenbügel, an denen das Federscharnier 1 angebracht ist, werden Zugkräfte auf das Scharnierelement 31 ausgeübt, denen die Schraubenfeder 45 entgegenwirkt. Das Mittelteilscharnier hat Anlageflächen, die an der Anlagefläche 49 anliegen und definierte Grundpositionen der Bügel gegenüber dem Mittelteil sicherstellen. Die Bügel werden auf diese Weise einmal in der eingeklappten und zum anderen in der ausgeklappten Position durch das Federscharnier 1 gehalten.

Die Schraubenfeder 45 weist einen verstärkten Bereich 51 auf, der im hier dargestellten Ausführungsbeispiel aus zwei auf Block liegenden Federwindungen besteht. Der verstärkte Bereich 51 liegt in unmittelbarer Nähe der Schweißwarze 37. Der verstärkte Bereich 51 der Schraubenfeder 45 wirkt damit bei einem Schweißvorgang als Stützkörper 3 unerwünschten Verformungen des Gehäuses 2 entgegen.

Die Schweißwarze 37 und eine zweite mittige Schweißwarze 11' des Gehäuses 2 weisen bei diesem Ausführungsbeispiel ringförmige Ausnehmungen 53 auf, die unmittelbar neben den Schweißwarzen 37, 11' verlaufen und dazu dienen, das beim Schweißvorgang verlagerte Material aufzunehmen. Das heißt, das beim Schweißvorgang erweichte und verlagerte Material wird mittels der Ausnehmungen 53 kanalisiert. Damit wird das beim Elektroschweißen erweichte Material aufgefangen und Beulen, wie sie anhand von Figur 2 erläutert werden, vermieden.

Figur 7 zeigt eine Unteransicht des in Figur 6 dargestellten Federscharniers 1. Gleiche Teile sind mit gleichen Bezugziffern versehen, so dass insofern auf die Beschreibung zu den vorangegangenen Figuren verwiesen wird.

In der Unteransicht ist die Gehäusewand 15 mit der umgebenden Schweißwarze 37 und der zweiten Schweißwarze 11' und das Scharnierelement 31 mit der hier gepunktet angedeuteten Bohrung 41 zu erkennen. Bei dieser Ansicht wird deutlich, dass die Schweißwarze 37, die die Sicke 35 umgibt, und die zweite Schweißwarze 11' in Längsrichtung gesehen mittig an der Gehäusewand 15 angebracht sind. In der Mitte der Schweißwarze 37 befindet sich die untere Sicke 35, die die Schraubenfeder 45 und damit das Scharnierelement 31 in der zylindrischen Ausnehmung 5 des Gehäuses 1 fixiert. Zu erkennen ist eine Nut 55 in der Gehäusewand 15 in die das Scharnierelement 31 eingreift. Die Nut 55 bildet ein Gleitlager und damit eine Führung für das Scharnierelement 31, die ein Verdrehen des Scharnierelements 31 um die Mittelachse des Federstifts 43 verhindert.

Figur 8 zeigt ein weiteres Ausführungsbeispiel des in Figur 6 dargestellten Federscharniers 1. Gleiche Teile sind mit gleichen Bezugziffern versehen, so dass insofern auf die Beschreibung zu den vorangegangenen Figuren verwiesen wird.

Der wesentliche Unterschied zu Figur 6 besteht darin, dass das Federscharnier 1 einen Stützkörper 3' mit einer einseitig offenen Nut 57 aufweist. Der Stützkörper 3' dient dabei als Führung für den Federstift 43 und als Federanschlag für die Schraubenfeder 45. Aufgrund der Federkräfte der Schraubenfeder 45 wird der Stützkörper 3' gegen die untere Sicke 35 gedrückt, die in den freien Innenraum der Ausnehmung 5 hineinragt und damit über den Stützkörper 3' und über die Schraubenfeder 45 das Scharnierelement 31 in der Ausnehmung 5 des Gehäuses 2 fixiert. Aufgrund der Federkräfte der Schraubenfeder 45, die einerseits auf den Federanschlag 47 und andererseits über den Stützkörper 3' und die untere Sicke 35 auf das Gehäuse 2 wirken, ergibt sich das bereits in Figur 6 beschriebene Funktionsprinzip des Federscharniers 1.

Der Stützkörper 3' schlägt so an der unteren Sicke 35 an, dass dieser sich in unmittelbarer Nähe der Schweißwarze 37 befindet. Damit verhindert der Stützkörper 3', wie bereits zuvor beschrieben, bei einem Elektroschweißvorgang unerwünschte Verlagerungen von Material und möglicherweise auftretende Verformungen des Gehäuses 1.

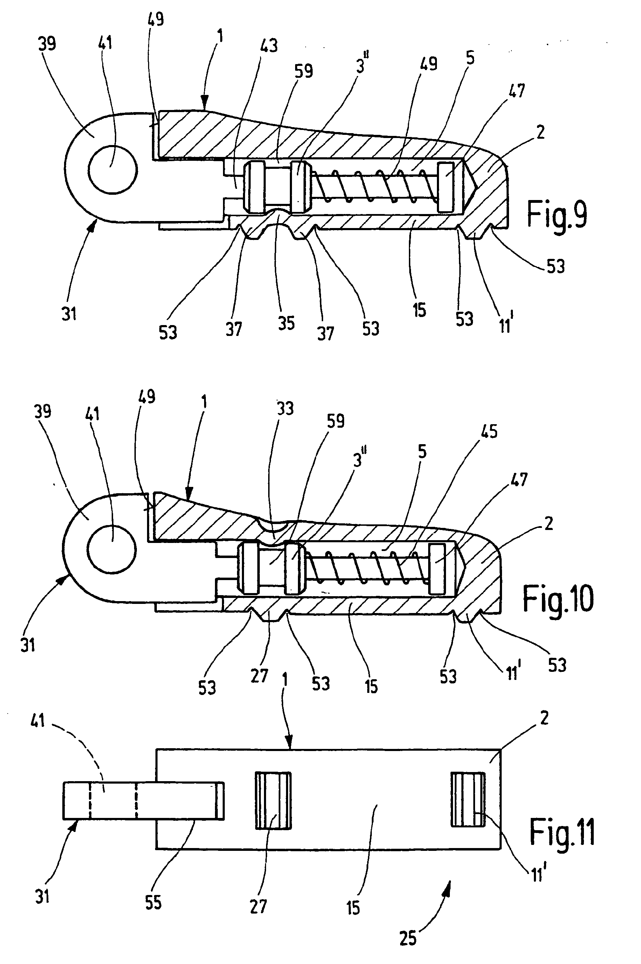

Figur 9 zeigt ein weiteres vorteilhaftes Ausführungsbeispiel des Federscharniers 1. Gleiche Teile sind mit gleichen Bezugziffern versehen, so dass auf die Beschreibung zu den vorangegangenen Figuren verwiesen wird.

Zu erkennen ist ein Stützkörper 3", der im Unterschied zum Stützkörper 3' eine umlaufende Nut 59 mit zwei seitlichen Begrenzungsflanken aufweist. Die untere Sicke 35 des Gehäuses 2 greift in die Nut 59 ein und fixiert damit den Stützkörper 3" in der zylindrischen Ausnehmung 5 des Gehäuses 2. Der Stützkörper 3" ist dabei so in der zylindrischen Ausnehmung 5 des Gehäuses 2 angeordnet, dass er in unmittelbarer Nähe der Schweißwarze 37 liegt. Der Stützkörper 3" wirkt damit erstens -wie bereits beschrieben- als Stützkörper, zweitens als Führung für den Federstift 43 und drittens mittels der umlaufenden Nut 59 und der unteren Sicke 35 als Fixierung des Scharnierelements 31 im Gehäuse 2.

Figur 10 zeigt ein weiteres Ausführungsbeispiel des Federscharniers 1. Gleiche Teile sind mit gleichen Bezugziffern versehen, so dass insofern auf die Beschreibung zu den vorangegangenen Figuren verwiesen wird.

Zu erkennen sind die -in Längsrichtung des Gehäuses 2 gesehen- mittige Schweißwarze 27 und die ebenfalls mittige Schweißwarze 11'. In die umlaufende Nut 59 des Stützkörpers 3" greift die obere Sicke 33 des Gehäuses 2 ein. Bei dieser Ausführung ist besonders vorteilhaft, dass beim Elektroschweißen Material der Gehäusewand 15 in die Ausnehmung 5 des Gehäuses 2 verlagert wird. Der Stützkörper 3" und die Schweißwarze 37 sind dabei so angeordnet, dass das verlagerte Material der Gehäusewand 15 in die umlaufende Nut 59 des Stützkörpers 3" eingreift.

Das in die Ausnehmung 5 des Gehäuses 2 verlagerte Material dient bei diesem Ausführungsbeispiel als zusätzliche Fixierung des Stützkörpers 3". Dies bietet den Vorteil, dass der Prozessschritt des Einbringens der in den vorangegangenen Figuren beschriebenen unteren Sicke 35 entfallen kann. Gegebenenfalls kann dabei auch auf die obere Sicke 33 verzichtet werden, so dass also ein Arbeitsgang -Einbringen der Sicke 33- entfällt.

Figur 11 zeigt eine Unteransicht des in Figur 10 dargestellten Federscharniers 1. Gleiche Teile sind mit gleichen Bezugsziffern versehen, so dass insofern auf die Beschreibung zu den vorangegangenen Figuren verwiesen wird.

Zu erkennen sind die mittige Schweißwarze 27 und die zweite mittige Schweißwarze 11'. Die mittige Schweißwarze 27 weist eine längliche Form auf, die quer zur Längsrichtung des Gehäuses 2 verläuft und die eine gezielte Verlagerung von Material beim Schweißvorgang in die Nut 59 des Stützkörpers 3" gewährleistet.

Nach allem wird Folgendes deutlich: Zur Fixierung des Scharnierelements im Inneren des Gehäuses des Federscharniers können Sicken vorgesehen werden. Dabei kann oben und unten je eine einzige Sicke vorhanden sein oder aber auch zwei Sicken, eine oben und eine unten. Zusätzlich oder anstelle der Sicken können durch den Elektroschweißvorgang deformierte Wandbereiche des Gehäuses vorgesehen werden, die in die Ausnehmung im Gehäuse vorspringen und so das Scharnierelement fixieren. Mit dem Begriff "Fixieren" ist hier lediglich gemeint, dass das Scharnierelement nicht gänzlich aus dem Gehäuse herausgezogen werden kann. Die freie Beweglichkeit des Scharnierelements muss erhalten bleiben, um die Grundfunktion des Federscharniers zu gewährleisten. Beim Fixieren des Scharnierelements wird also lediglich sichergestellt, dass ein Widerlager für das als Schraubenfeder ausgebildete Federelement gebildet wird. Damit können die beim Herausziehen des Scharnierelements entstehenden Rückstellkräfte aufgebaut werden.

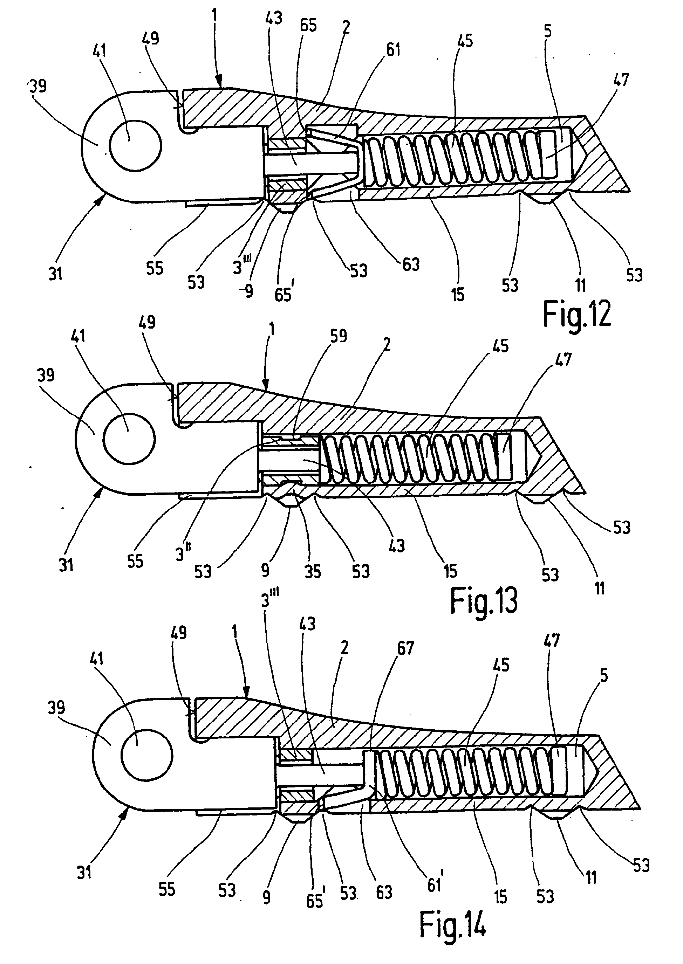

Figur 12 zeigt eine weitere vorteilhafte Ausführungsform des Federscharniers 1 mit einem Rastelement 61. Gleiche Teile sind mit gleichen Bezugsziffern versehen, so dass insofern auf die Beschreibung zu den vorangegangenen Figuren verwiesen wird.

Anders als die vorangegangenen Ausführungsbeispiele weist das Gehäuse 2 eine unten offene Nut 63 auf, die die zylindrische Ausnehmung 5 des Gehäuses 2 oben und unten schneidet. Hierdurch werden Absätze 65 und 65' gebildet, in die das Rastelement 61 eingreift. Das Rastelement 61 weist eine Öffnung auf, die der Federstift 43 durchgreift.

In Figur 12 befindet sich das Rastelement 61 im verrasteten Zustand, also in Anlagekontakt mit den Absätzen 65, 65' und bildet einen Anschlag für die Schraubenfeder 45. Das Rastelement 61 kann hier gleichzeitig als Führung für den Federstift 43 des Scharnierelements 31 dienen. Das Scharnierelement 31 wird über das Rastelement 61 mittels der bereits beschriebenen Federkräfte der Schraubenfeder 45 in der zylindrischen Ausnehmung 5 des Gehäuses 2 gehalten.

Das Federscharnier 1 weist einen Stützkörper 3"' auf, der sich in unmittelbarer Nähe der Schweißwarze 9 befindet. Das hier gezeigte Ausführungsbeispiel weist vier paarweise angeordnete Schweißwarzen auf, wovon hier nur die Schweißwarze 9 und die Schweißwarze 11 sichtbar sind. Der Stützkörper 3"' dient hier als Führung für den Federstift 43 und damit des Scharnierelements 31 entlang der Mittelachse des Führungsstabes 43 und zur Stabilisierung des Gehäuses 2 während eines Schweißprozesses. Weiter zu erkennen ist, dass die Gehäusewand 15 durch die Nut 63 und durch die Nut 55 unterbrochen ist und damit nach unten geöffnet ist.

Figur 13 zeigt ein weiteres Ausführungsbeispiel des Federscharniers 29 mit dem Stützkörper 3" und der unteren Sicke 35, die zwischen der ersten Schweißwarze 9 und der hier nicht sichtbaren ersten Schweißwarze 9' angeordnet ist. Gleiche Teile sind mit gleichen Bezugsziffern versehen, so dass insofern auf die Beschreibung zu den vorangegangenen Figuren verwiesen wird.

In diesem vorteilhaften Ausführungsbeispiel der Erfindung sind am Federscharnier 1 zur Verbindung mit einem Brillenbügel vier Schweißwarzen vorgesehen, wovon hier die erste Schweißwarze 9 und die zweite Schweißwarze 11 sichtbar sind. Die untere Sicke 35 ist so in der Gehäusewand 15 des Gehäuses 2 eingebracht, dass diese zwischen der ersten Schweißwarze 9 und der hier nicht dargestellten, vor der Schnittebene liegenden ersten Schweißwarze 9' liegt. Die Sicke 35 greift auf der Innenseite der zylindrischen Ausnehmung 5 des Gehäuse 2 in die umlaufende Nut 59 des Stützkörpers 3" ein, wodurch der Stützkörper 3" in der zylinderischen Ausnehmung 5 des Gehäuses 2 fixiert wird. Damit wirkt der Stützkörper 3" -wie bereits beschrieben- als Anschlag für die Schraubenfeder 45 und fixiert damit gleichzeitig das Scharnierelement 31 im Gehäuse 1 des Federscharniers 1.

Zusätzlich zu der Fixierung durch die untere Sicke 35 kann beim Verschweißen erweichtes und verlagertes Material der Gehäusewand 15 des Gehäuses 2 in das Innere der zylindrischen Ausnehmung 5 verlagert werden. In dem hier dargestellten Ausführungsbeispiel sind analog dem in Figur 10 beschriebenen Ausführungsbeispiel die ersten Schweißwarzen 9, 9' so angeordnet, dass sie sich in unmittelbarer Nähe der umlaufenden Nut 59 des Stützkörpers 3" befinden. Dies bedeutet, dass das ins Innere des Gehäuses 2 verlagerte Material in die Nut 59 eingreift und damit zusätzlich zur Fixierung des Stützkörpers 3" durch die untere Sicke 35 diesen fixiert. Es wird deutlich, dass wegen des beim Elektroschweißen verlagerten Materials auch ohne weiteres auf die Sicke 35 verzichtet werden kann.

Figur 14 zeigt ein weiteres vorteilhaftes Ausführungsbeispiel des Federscharniers 29 mit einem Rastelement 61'. Gleiche Teile sind mit gleichen Bezugziffern versehen, so das insofern auf die Beschreibung zu vorhergegangenen Figuren verwiesen wird.

Zu erkennen ist, dass die unten offene Nut 63 nur bis zirka zur Mittelachse der zylindrischen Ausnehmung 5 des Gehäuses 2 reicht. Hierdurch entsteht der Absatz 65', in den das Rastelement 61' eingreift. Im verrasteten Zustand greift das Rastelement 61' in den Absatz 65' ein. Es dient dabei als Anschlag für die Schraubenfeder 45 und wird aufgrund der Federkräfte der Schraubenfeder 45 gegen einen Abstützbereich 67 des Gehäuses 2 gedrückt. Das Rastelement 61' weist eine hier nicht dargestellte geeignete Öffnung auf, durch die der Federstift 43 hindurch verläuft, an dem das Rastelement 61' zusätzlich anliegt und damit stabilisiert wird.

Aufgrund der hier beschriebenen Beispiele wird deutlich, dass Form und Art und Anbringung des Stützkörpers variiert werden können. So ist es denkbar, den Stützkörper am Scharnierelement 31 vorzusehen, als Kubus auszuführen oder in einer beliebigen Form auszuführen. Die äußere Form des Stützkörpers ist jedoch vorzugsweise an die Innenkontur der Ausnehmung 5 angepasst. Denkbar ist es dann auch, anstelle der zylindrischen Ausnehmung eine rechteckförmige Ausnehmung oder einen beliebig gestalteten Hohlraum in dem Gehäuse des Federscharniers 1 vorzusehen. Es ist auch möglich für mehrere Schweißwarzen mehrere beliebig gestaltete einbringbare und/oder als separates Teil ausgebildete und herausnehmbare Stützkörper vorzusehen. Wesentlich ist dabei, dass der Stützkörper im Bereich von Schweißwarzen angeordnet ist und bei einem Schweißverfahren möglicherweise verlagertes Material in einer gewünschten Art und Weise lenkt beziehungsweise beeinflusst und die Stabilität des Gehäuses des Federscharniers während des Schweißprozesses und/oder beim späteren Gebrauch des Federscharniers erhöht. Überdies ist es möglich, für die Fixierung des Scharnierelements im Gehäuse beliebige Fixierelemente, wie Rast- oder Federelemente, Sicken oder dergleichen vorzusehen und die Rückstellkräfte für das Scharnierelement durch beliebige Federelemente wie beispielsweise Schraubenfedern, Mäanderfedern, Torsionsfedern oder dergleichen aufzubringen.

Die Gehäuse 2 der Federscharniere 1 sind vorzugsweise so ausgebildet, dass die beim Elektroschweißen auftretenden Ströme in einem Abstand zum Federelement, also hier zur Schraubenfeder 45, durch das Gehäuse 2 geleitet werden. Damit wird eine übermäßige Erwärmung und Schwächung des Federelements vermieden, außerdem ein Anheften der Schraubenfeder 45 am Gehäuse 2. Die Beeinflussung der Ströme kann durch unterschiedliche Wandstärken des Gehäuses 2 erzielt werden, aber auch dadurch, dass ein elektrisch leitender Stützkörper vorgesehen ist, wie er hier beschrieben wurde. Dieser wird dann vorzugsweise im Bereich der Schweißwarzen angeordnet, um hier einen besonders niedrigen elektrischen Widerstand zu realisieren. Damit werden die elektrischen Ströme durch das Gehäuse und den Stützkörper in die Schweißwarzen geleitet, die damit schmelzen und das für den Schweißvorgang erforderliche Material zur Verfügung stellen. Es wird deutlich, dass die Schweißwarzen also nicht nur auf der Gehäuseunterseite, die dem Bügel zugewandt ist, angeordnet sein können sondern auch auf der Bügeloberseite. Die auf dem Bügel vorhandenen Schweißwarzen können dann mit einem aufzubringenden Federscharnier 1 beziehungsweise dessen Gehäuse zusammenwirken. Allerdings ist bei dieser Ausführungsform darauf zu achten, dass das Federscharnier so auf die Schweißwarzen aufgebracht wird, dass der Stützkörper die beim Elektroschweißen auftretenden Kräfte sicher abfangen kann. Es zeigt sich also, dass die anhand der Figuren hier erläuterten Ausführungsbeispiele zu bevorzugen sind, weil dann die Schweißwarzen genau in dem gewünschten Bereichen angeordnet sein können.

Allen hier dargestellten Ausführungsbeispielen ist gemeinsam, dass das Scharnierelement als vormontierte Baugruppe ausgebildet sein und in das Gehäuse 2 eingesetzt werden kann.

## Patentansprüche

1. Elektroschweißbares Federscharnier (1) mit einem Gehäuse (2), das einen Hohlraum aufweist, mit einem in das Gehäuse einbringbaren Scharnierelement (31) und mit einem mit dem Scharnierelement zusammenwirkenden Federelement, das ebenfalls in das Gehäuse einbringbar ist und mit am Gehäuse vorgesehenen Schweißwarzen, **dadurch gekennzeichnet, dass** in dem Hohlraum ein Stützkörper (3; 3'; 3"; 3"') vorgesehen ist, der so ausgebildet ist, dass sich das Gehäuse des Federscharniers beim Verschweißen mit einem Brillenbügel nicht verformt und keine unerwünschte Materialverlagerung in den Hohlraum des Gehäuses stattfindet.

2. Federscharnier nach Anspruch 1, **dadurch gekennzeichnet, dass** der Stützkörper (3) als separates Teil ausgebildet und aus dem Hohlraum (5) herausnehmbar ist.

3. Federscharnier nach Anspruch 1 oder 2, **dadurch gekennzeichnet, dass** der Stützkörper (3';3") Teil des in das Gehäuse (2) einbringbaren Scharnierelements (31) ist.

4. Federscharnier nach einem der vorhergehenden Ansprüche, **dadurch gekennzeichnet, dass** der Stützkörper Teil eines Federelements, insbesondere eines verstärkten Bereichs (51) einer Schraubenfeder (45) des Scharnierelements (31) ist.

5. Federscharnier nach einem der vorhergehenden Ansprüche, **dadurch gekennzeichnet, dass** der Stützkörper (3';3'';3''') als Führungselement für das Scharnierelement (31) ausgebildet ist.

6. Federscharnier nach einem der vorhergehenden Ansprüche, **dadurch gekennzeichnet, dass** das Gehäuse (2) zumindest zwei Schweißwarzen aufweist.

7. Federscharnier nach Anspruch 6, **dadurch gekennzeichnet, dass** der Stützkörper im Bereich mindestens einer Schweißwarze (9,9';27;37) angeordnet ist.

8. Federscharnier nach einem der vorhergehenden Ansprüche, **dadurch gekennzeichnet, dass** das Scharnierelement (31) als vormontierte Einheit in das Gehäuse (2) einbringbar ist.

9. Federscharnier nach einem der vorhergehenden Ansprüche, **dadurch gekennzeichnet, dass** das Federscharnier (1) zumindest eine Sicke (33;35) und/oder Rastelemente (61;61') zum Fixieren des Scharnierelements (31) im Gehäuse (2) aufweist.

10. Federscharnier nach Anspruch 9, **dadurch gekennzeichnet, dass** die Sicke (35) von einer Schweißwarze (37) umgeben ist.

11. Federscharnier nach einem der vorhergehenden Ansprüche, **dadurch gekennzeichnet, dass** der Stützkörper (3',3") eine Nut (57; 59) aufweist.

12. Federscharnier nach einem der vorhergehenden Ansprüche, **dadurch gekennzeichnet, dass** bei dem Elektroschweißverfahren verlagertes Material das Scharnierelement (31) im Gehäuse (2) fixiert.

13. Federscharnier nach einem der vorhergehenden Ansprüche, **dadurch gekennzeichnet, dass** das beim Elektroschweißverfahren verlagerte Material in die Nut (59) des Stützkörpers (3") eingreift.

14. Federscharnier nach einem der vorhergehenden Ansprüche, **dadurch gekennzeichnet, dass** das Gehäuse (2) durch MIM-Technologie (Metal Injection Molding) herstellbar ist.

15. Verfahren zum Befestigen eines Federscharniers nach einem der Ansprüche 1 bis 14 an einem Brillenbügel mittels Elektroschweißen, **dadurch gekennzeichnet, dass** während des Elektroschweißvorgangs ein Stützkörper in den Hohlraum des Gehäuses des Federscharniers eingebracht wird, der so ausgebildet ist, dass sich das Gehäuse des Federscharniers beim Verschweißen mit dem Brillenbügel nicht verformt und keine unerwünschte Materialverlagerung in den Hohlraum des Gehäuses stattfindet.

## Claims

1. Electrically weldable spring hinge (1) with a housing (2) having a cavity, with a hinge element (31) insertable into the housing and with a spring element interacting with the hinge element, the spring element being insertable into the housing as well, and with welding projections provided at the housing, **characterized in that** a supporting body (3; 3'; 3"; 3"') is provided in the cavity designed such that, upon welding to a temple, the housing of the spring hinge is not deformed and that no undesired material displacement occurs into the cavity of the housing.

2. The spring hinge according to claim 1, **characterized in that** the supporting body (3) is designed as a separate part and can be removed from the cavity (5).

3. The spring hinge according to claim 1 or 2, **characterized in that** the supporting body (3'; 3") is part of the hinge element (31) which can be inserted into the housing (2).

4. The spring hinge according to one of the preceding claims, **characterized in that** the supporting body is part of a spring element, in particular of a reinforced region (51) of a helical spring (45) of the hinge element (31).

5. The spring hinge according to one of the preceding claims, **characterized in that** the supporting body (3'; 3"; 3"') is designed as a guide element for the hinge element (31).

6. The spring hinge according to one of the preceding claims, **characterized in that** the housing (2) has at least two welding projections.

7. The spring hinge according to claim 6, **characterized in that** the supporting body is arranged in the region of at least one welding projection (9, 9'; 27; 37).

8. The spring hinge according to one of the preceding claims, **characterized in that** the hinge element (31) can be inserted as a pre-assembled unit into the housing (2).

9. The spring hinge according to one of the preceding claims, **characterized in that** the spring hinge (1) has at least one bead (33; 35) and/or latching elements (61; 61') for fixing the hinge element (31) in the housing (2).

10. The spring hinge according to claim 9, **characterized in that** the bead (35) is surrounded by a welding projection (37).

11. The spring hinge according to one of the preceding claims, **characterized in that** the supporting body (3'; 3") has a groove (57; 59).

12. The spring hinge according to one of the preceding claims, **characterized in that** material displaced during the electric welding process fixes the hinge element (31) in the housing (2).

13. The spring hinge according to one of the preceding claims, **characterized in that** the material displaced during the electric welding process engages in the groove (59) of the supporting body (3").

14. The spring hinge according to one of the preceding claims, **characterized in that** the housing (2) can be produced by MIM technology (Metal Injection Molding).

15. Method for fixing a spring hinge according to one of the claims 1 to 14 to a temple by means of electrical welding, **characterized in that** during the electric welding process a supporting body is inserted into the cavity of the housing of the spring hinge, the supporting body being designed such that, upon welding to a temple, the housing of the spring hinge is not deformed and that no undesired material displacement occurs into the cavity of the housing.

## Revendications

1. Charnière élastique (1) pouvant subir une soudure électrique avec un logement (2) qui présente un espace creux, avec un élément de charnière (31) pouvant être introduit dans le logement et avec un élément élastique coopérant avec l'élément de charnière qui peut également être introduit dans le logement et avec des boutons de soudure prévus sur le logement, **caractérisée en ce qu'**un corps d'appui (3 ; 3' ; 3" ; 3"') est prévu dans l'espace creux, lequel est réalisé de sorte que le logement de la charnière élastique ne se déforme pas lors de la soudure avec une branche de lunettes et qu'aucun déplacement de matière indésirable n'a lieu dans l'espace creux du logement.

2. Charnière élastique selon la revendication 1, **caractérisée en ce que** le corps d'appui (3) est réalisé en tant que pièce séparée et peut être retiré de l'espace creux (5).

3. Charnière élastique selon la revendication 1 ou 2, **caractérisée en ce que** le corps d'appui (3' ; 3") fait partie de l'élément de charnière (31) pouvant être introduit dans le logement (2).

4. Charnière élastique selon l'une quelconque des revendications précédentes, **caractérisée en ce que** le corps d'appui fait partie d'un élément élastique, notamment d'une zone renforcée (51) d'un ressort cylindrique (45) de l'élément de charnière (31).

5. Charnière élastique selon l'une quelconque des revendications précédentes, **caractérisée en ce que** le corps d'appui (3' ; 3" ; 3"') est réalisé en tant qu'élément de guidage pour l'élément de charnière (31).

6. Charnière élastique selon l'une quelconque des revendications précédentes, **caractérisée en ce que** le logement (2) présente au moins deux boutons de soudure.

7. Charnière élastique selon la revendication 6, **caractérisée en ce que** le corps d'appui est disposé dans la région d'au moins un bouton de soudure (9, 9' ; 27 ; 37).

8. Charnière élastique selon l'une quelconque des revendications précédentes, **caractérisée en ce que** l'élément de charnière (31) peut être introduit dans le logement (2) en tant qu'unité prémontée.

9. Charnière élastique selon l'une quelconque des revendications précédentes, **caractérisée en ce que** la charnière élastique (1) présente au moins une moulure (33 ; 35) et/ou des éléments d'encliquetage (61 ; 61') pour fixer l'élément de charnière (31) dans le logement (2).

10. Charnière élastique selon la revendication 9, **caractérisée en ce que** la moulure (35) est entourée d'un bouton de soudure (37).

11. Charnière élastique selon l'une quelconque des revendications précédentes, **caractérisée en ce que** le corps d'appui (3', 3") présente une rainure (57 ; 59).

12. Charnière élastique selon l'une quelconque des revendications précédentes, **caractérisée en ce que** de la matière déplacée lors du procédé de soudure électrique fixe l'élément de charnière (31) dans le logement (2).

13. Charnière élastique selon l'une quelconque des revendications précédentes, **caractérisée en ce que** la matière déplacée lors du procédé de soudure électrique s'enclenche dans la rainure (59) du corps d'appui (3").

14. Charnière élastique selon l'une quelconque des revendications précédentes, **caractérisée en ce que** le logement (2) peut être fabriqué par la technologie MIM (Metal Injection Molding/moulage par injection de métal).

15. Procédé pour fixer une charnière élastique selon l'une quelconque des revendications 1 à 14 à une branche de lunettes au moyen d'une soudure électrique, **caractérisé en ce qu'**un corps d'appui est introduit dans l'espace creux du logement de la charnière élastique pendant le processus de soudure électrique, lequel corps d'appui est réalisé de sorte que le logement de la charnière élastique ne se déforme pas lors de la soudure avec la branche de lunettes et qu'aucun déplacement de matière indésirable n'a lieu dans l'espace creux du logement.
